# EUROPEAN PATENT APPLICATION

(11) **EP 4 362 290 A1**
(43) Date of publication of application: **01.05.2024**
(21) Application number: 22828007.9
(22) Date of filing: 24.03.2022
(51) Int. Cl.: H02K 5/20

(54) **MOTOR AND MOTOR UNIT**

(30) Priority: 21.06.2021 JP 2021102789
(71) Applicant: Yamaha Hatsudoki Kabushiki Kaisha, Iwata-shi, Shizuoka 438-8501 (JP)
(72) Inventor: KAMICHIKA, Takuro, Iwata-shi, Shizuoka 438-8501 (JP); KUROSAWA, Shinichi, Iwata-shi, Shizuoka 438-8501 (JP); TANINO, Shogo, Iwata-shi, Shizuoka 438-8501 (JP)
(74) Representative: Stöckeler, Ferdinand
(86) International application number: PCT/JP2022/014119
(87) International publication number: WO 2022/270088

(57) **Abstract**

A motor unit 10 includes a motor 12 and a speed reducer 14. The motor 12 includes a case 18 having a stator housing 20, a first motor cover 22 and a second motor cover 24. Outside the stator housing 20, there are provided a first externally attached pipe 32 which has an outward oil path 34 and a second externally attached pipe 36 which has a return oil path 38, which are held by the first motor cover 22 and the second motor cover 24. A rotor 40 is provided inside the case 18 and held by the first motor cover 22 and the second motor cover 24. A stator core 62 is provided inside the case 18 and fixed to the stator housing 20 by means of shrink fit. The speed reducer 14 has an oil reservoir 126 which communicates with the return oil path 38.

## Description

### TECHNICAL FIELD

The present invention relates to motors and motor units, and more specifically to a motor and a motor unit used in an electric vehicle.

### BACKGROUND ART

As an example which is pertinent to conventional techniques of this kind, Patent Literature 1 discloses a driving apparatus. The driving apparatus includes a motor having a rotor and a stator placed radially outside the rotor; a housing which houses the motor; and a cooling medium flow path passing inside the housing and allowing a cooling medium. The housing has an inner circumferential surface, the stator has an outer circumferential surface, and the surfaces are radially opposed to each other. The cooling medium flow path includes an injection hole for injection of the cooling medium between the housing's inner circumferential surface and the stator's outer circumferential surface, and a guide flow path located between the housing's inner circumferential surface and the stator's outer circumferential surface. The guide flow path is a groove which is at least in one of the housing's inner circumferential surface and the stator's outer circumferential surface, extending in a circumferential direction.

### CITATION LIST

### PATENT LITERATURE

Patent Literature 1: JP-A 2021-52523

### SUMMARY OF INVENTION

### TECHNICAL PROBLEM

Patent Literature 1 does not show sufficient consideration to structural simplification between the housing and the stator, or to size reduction of an outer shape of the housing.

Therefore, a primary object of the present invention is to simplify the structure between the stator housing and the stator core thereby providing a motor and a motor unit including a stator housing having a reduced size.

### SOLUTION TO PROBLEM

According to an aspect of the present invention, there is provided a motor comprising a case including a stator housing, a first motor cover provided at an output side end portion of the stator housing, and a second motor cover provided at a non-output side end portion of the stator housing; an outward oil path provided outside the stator housing and providing communication between the first motor cover and the second motor cover; a return oil path provided outside the stator housing at a lower position than the outward oil path and providing communication between the first motor cover and the second motor cover; a rotor provided inside the case and held by the first motor cover and the second motor cover; and a stator core provided inside the case and radially outside the rotor and fixed to the stator housing.

In the present invention, both of the outward oil path and the return oil path are provided, not between the stator housing and the stator core, but outside the stator housing, providing communication between the first motor cover and the second motor cover. Also, the stator core is fixed to the stator housing. Therefore, by simplifying the structure between the stator housing and the stator core, it is possible to reduce the size of the stator housing.

Preferably, the stator core is fixed to the stator housing by means of shrink fit. In this case, the outer circumferential surface of the stator core and the inner circumferential surface of the stator housing make surface contact in the circumferential direction, making it possible to hold the stator core more firmly by the stator housing.

Further, preferably, the first motor cover includes a first oil path communicating with the outward oil path for supplying oil to the outward oil path, and a second oil path branched from the first oil path for supplying oil into the case. In this case, since it is possible to supply oil to the outward oil path via the first oil path inside the first motor cover and into the case via the second oil path, it is possible to supply oil to the rotor and the stator core smoothly while making effective use of the first motor cover for oil supply.

Further, preferably, the second motor cover includes a third oil path communicating with the outward oil path for supplying oil from the outward oil path into the case. In this case, it is possible to supply oil from the outward oil path into the case via the third oil path inside the second motor cover and to supply oil to the rotor and the stator core smoothly while making effective use of the second motor cover for oil supply.

Preferably, the stator housing has no ribs from the output side end portion to the non-output side end portion in its outer circumferential surface. In this case, it is possible to reduce the weight, and further reduce the size, of the stator housing.

Further, preferably, the motor further includes a first externally attached pipe having the outward oil path and held by the first motor cover and the second motor cover, and a second externally attached pipe having the return oil path and held by the first motor cover and the second motor cover. In this case, it is possible to provide the outward oil path and the return oil path easily outside the stator housing.

Further, preferably, the outward oil path has a smaller sectional area than the return oil path. In this case, it is possible to discharge oil to the outside smoothly without the oil stagnating inside the return oil path.

There is provided a motor unit including the above described motor, and a speed reducer provided on a side of the first motor cover in order to slow down rotation of the rotor and having an oil reservoir communicating with the return oil path.

In the present invention, it is possible to supply oil to the speed reducer smoothly.

It should be noted here that in the present invention, "output side end portion of the stator housing" refers to an axial end portion of the stator housing from which the motor output is taken off.

"Non-output side end portion of the stator housing" refers to an axial end portion of the stator housing from which the motor output is not taken off (an axial end portion on a side away from the output side end portion).

### ADVANTAGEOUS EFFECTS OF INVENTION

According to the present invention, it is possible to reduce the size of the stator housing by simplifying the structure between the stator housing and the stator core.

### BRIEF DESCRIPTION OF DRAWINGS

Fig. 1 is a front perspective view which shows a motor unit according to an embodiment of the present invention.
Fig. 2 is a rear perspective view which shows the motor unit in Fig. 1.
Fig. 3 is a right side view which shows the motor unit in Fig. 1.
Fig. 4 is a left side view which shows the motor unit in Fig. 1.
Fig. 5 is an illustrative sectional view which shows the motor unit in Fig. 1.
Fig. 6 is a plan view which shows a gasket.

### DESCRIPTION OF EMBODIMENTS

Hereinafter, embodiments of the present invention will be described with reference to the drawings.

A motor unit 10 according to an embodiment of the present invention is suitably applied to an electric vehicle. The terms front and rear, left and right, and up and down used in the embodiments of the present invention are defined based on a direction in which a rotor 40 (which will be described later) extends as the left-right direction, and a direction from a motor 12 (which will be described later) toward an inverter 16 (which will be described later) as the rearward direction. In the drawings, "Fr" indicates forward, "Rr" indicates rearward, "R" indicates rightward, "L" indicates leftward, "U" indicates upward and "Lo" indicates downward.

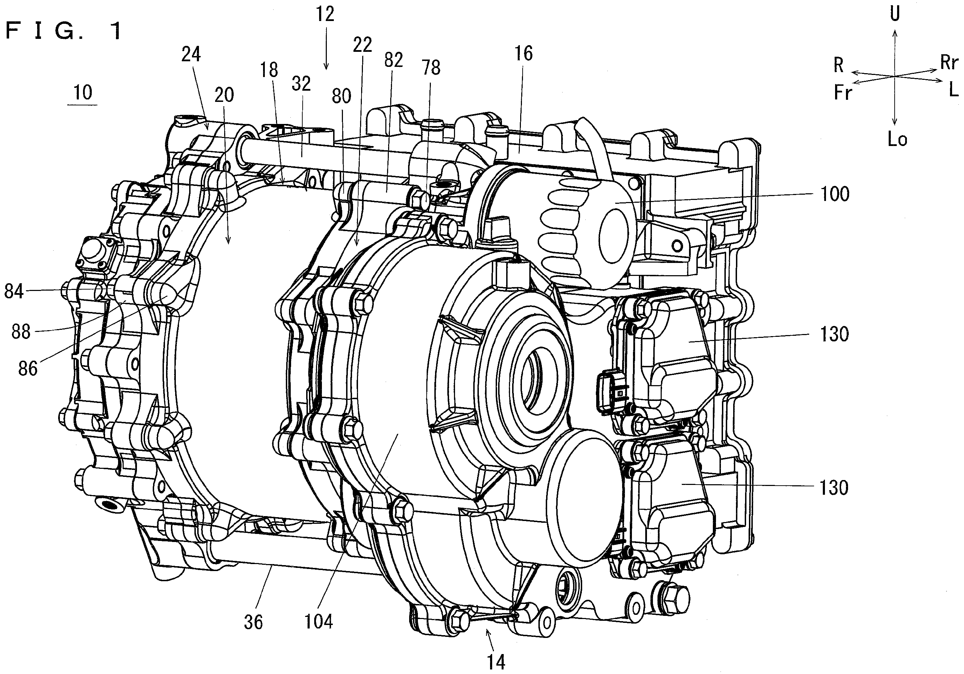

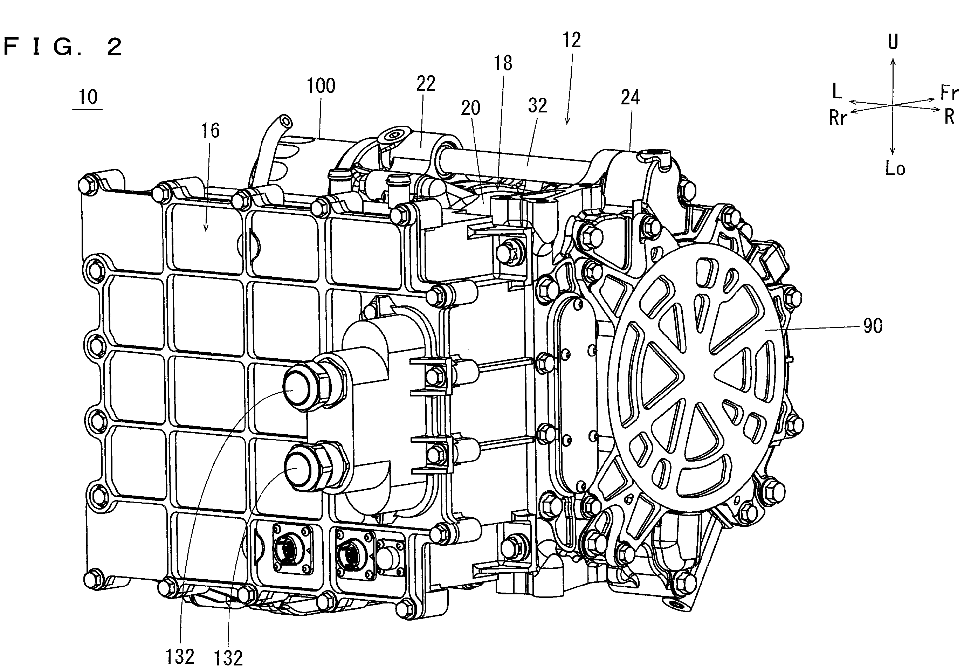

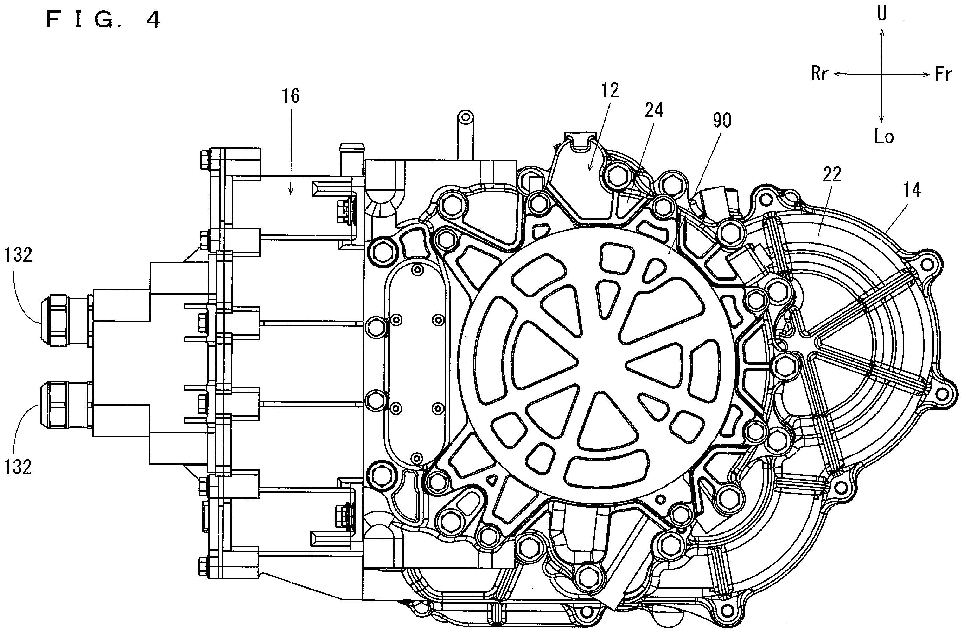

Referring to Fig. 1 through Fig. 4, the motor unit 10 is a mechatronic integrated unit including the motor 12, a speed reducer 14, and an inverter 16. The speed reducer 14 is provided on a side (left side in the present embodiment) of the motor 12, while the inverter 16 is provided behind the motor 12 and the speed reducer 14.

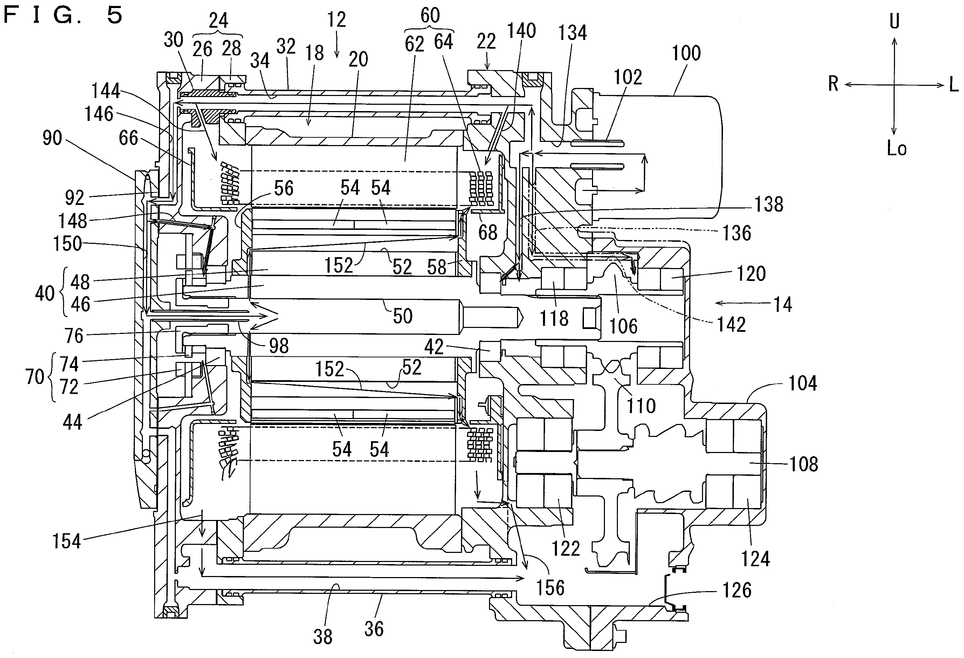

Referring also to Fig. 5, the motor 12 includes a case 18. The case 18 has a three-tier structure, and includes a stator housing 20, a first motor cover 22 provided at an output side end portion of the stator housing 20, and a second motor cover 24 provided at a non-output side end portion of the stator housing 20. The second motor cover 24 includes a cover main body 26, and a pipe holder 28 attached to the cover main body 26. A branching piece 30 is provided between the cover main body 26 and the pipe holder 28.

Outside the stator housing 20, there is provided a first externally attached pipe 32 held by the first motor cover 22 and the second motor cover 24. The first externally attached pipe 32 is a separate member from the stator housing 20, provided slightly spaced away from the stator housing 20, and sandwiched by the first motor cover 22 and the second motor cover 24. The first externally attached pipe 32 has an outlet side end portion, which is held by the pipe holder 28 and is connected with the branching piece 30. Inside the first externally attached pipe 32, there is formed an outward oil path 34 which provides communication between the first motor cover 22 and the second motor cover 24. Also, outside the stator housing 20, at a position lower than the first externally attached pipe 32, there is provided a second externally attached pipe 36 held by the first motor cover 22 and the second motor cover 24. The second externally attached pipe 36 is a separate member from the stator housing 20, provided slightly spaced away from the stator housing 20, and sandwiched by the first motor cover 22 and the second motor cover 24. The second externally attached pipe 36 has an inlet side end portion, which is held by the pipe holder 28. Inside the second externally attached pipe 36, there is formed a return oil path 38 which provides communication between the first motor cover 22 and the second motor cover 24. The return oil path 38 is provided at a lower position than the outward oil path 34. The outward oil path 34 and the return oil path 38 are columnar shaped. Preferably, the outward oil path 34 has a smaller sectional area than the return oil path 38. In other words, preferably, an inner diameter of the first externally attached pipe 32 is smaller than an inner diameter of the second externally attached pipe 36.

The rotor 40 is provided inside the case 18. The rotor 40 is held rotatably by the first motor cover 22 and the second motor cover 24 via motor bearings 42, 44. The rotor 40 includes a rotor shaft 46 and a rotor core 48. The rotor shaft 46 has an axially extending hollow portion 50. The rotor core 48 has a plurality of rotor core holes 52 and a plurality of magnets 54. End plates 56, 58 are disposed at two axial end portions of the rotor core 48.

Inside the case 18, a stator 60 is provided radially outside the rotor 40. The stator 60 includes a stator core 62 which is provided radially outside the rotor 40 and is fixed to the stator housing 20, and a stator coil 64 which is wound around the stator core 62. The stator core 62 is fixed to the stator housing 20 by means of shrink fit. Coil end covers 66, 68 are provided to cover two axial end portions of the stator coil 64, i.e., to cover coil ends.

Between the second motor cover 24 and the rotor shaft 46, there is provided a resolver 70 for detection of a rotating angle of the rotor shaft 46. The resolver 70 includes a resolver stator 72 which is attached to the second motor cover 24, and a resolver rotor 74 which is attached to the rotor shaft 46. The resolver rotor 74 is fixed to a rear end portion of the rotor shaft 46 with a bolt 76 which has a generally hat-like section.

Referring to Fig. 1, the stator housing 20 and the first motor cover 22 are connected to each other by a plurality of bolts 78. Each bolt 78 is threaded into a boss 80 which is provided on an output side end portion in an outer circumferential surface of the stator housing 20 and a boss 82 which is provided on an outer circumferential portion of the first motor cover 22. The stator housing 20 and the second motor cover 24 are connected to each other by a plurality of bolts 84. Each bolt 84 is threaded into a boss 86 which is provided on a non-output side end portion in an outer circumferential surface of the stator housing 20 and a boss 88 which is provided on an outer circumferential portion of the second motor cover 24. As understood, the bolts 78, 84 are formed short so that they do not take a span from the output side end portion where there is the first motor cover 22 to the non-output side end portion where there is the second motor cover 24, in the outer circumferential surface of the stator housing 20. Therefore, the bolts 78, 84 do not penetrate the stator housing 20 axially. Also, there are no ribs (locally formed thickwalled portions) formed in the outer circumferential surface of the stator housing 20, from the output side end portion where there is the first motor cover 22 to the non-output side end portion where there is the second motor cover 24.

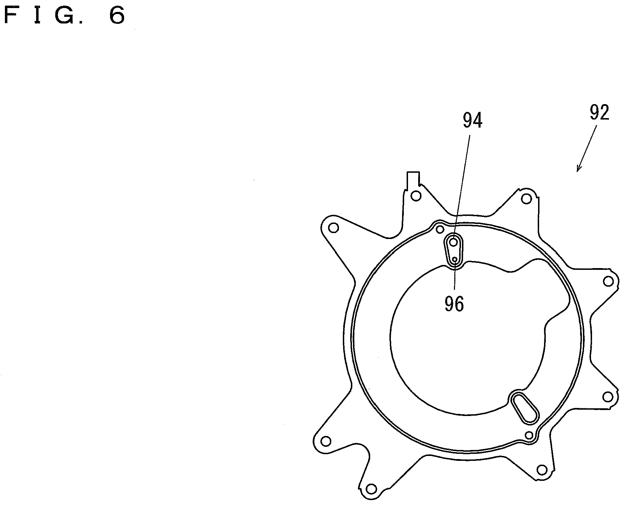

Referring to Fig. 5, a cover 90 is provided on a side of the second motor cover 24. A gasket 92 is placed between the second motor cover 24 and the cover 90. Referring to Fig. 6, the gasket 92 is formed in a generally annular shape, and has through-holes 94, 96 for communication between oil paths. A pipe 98 extending into the hollow portion 50 of the rotor shaft 46 is attached at a center portion of the cover 90.

In an outer surface of the first motor cover 22, an oil filter 100 is provided for filtration of oil which is to be supplied into the case 18. The oil filter 100 is supplied with oil from an oil cooler (not illustrated) provided outside the motor unit 10. The oil filter 100 and the first motor cover 22 are connected with each other by a union bolt 102.

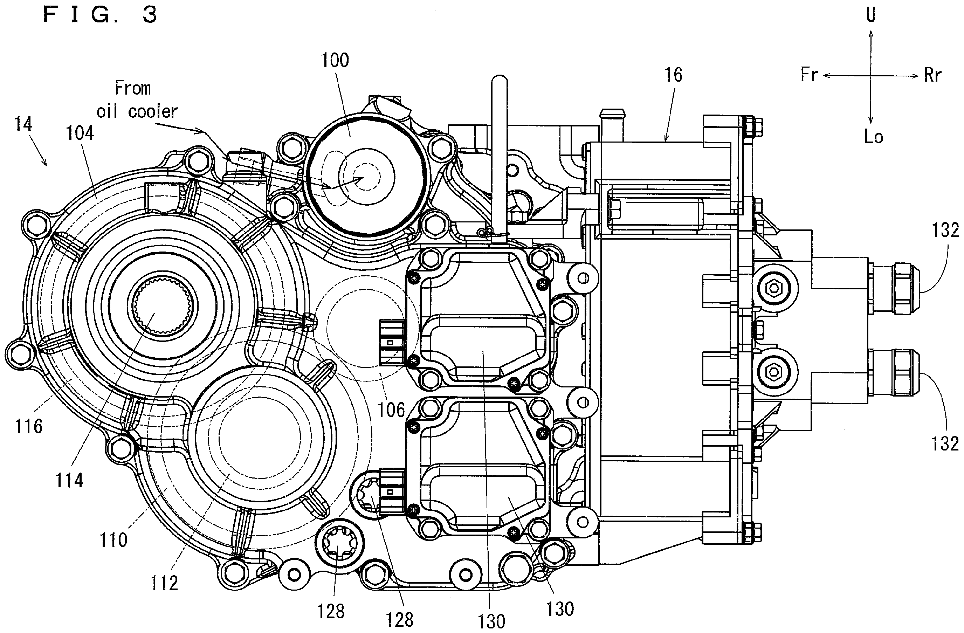

The speed reducer 14 is provided on a side (left side in the present embodiment) of the first motor cover 22 in order to slow down rotation of the rotor. The speed reducer 14 includes a gear cover 104 provided on a side of the first motor cover 22. Referring to Fig. 3 and Fig. 5, the gear cover 104 is provided therein with an input gear 106, an intermediate shaft 108, intermediate gears 110, 112, an output shaft 114, and an output gear 116. The intermediate shaft 108 and the output shaft 114 are in parallel to the rotor shaft 46. The input gear 106 is attached to a tip portion of the rotor shaft 46, and is supported rotatably by the first motor cover 22 and the gear cover 104 via input gear bearings 118, 120. The intermediate shaft 108 is supported rotatably by the first motor cover 22 and the gear cover 104 via intermediate gear bearings 122, 124. The intermediate gears 110, 112 are both attached to the intermediate shaft 108. The intermediate gear 110 meshes with the input gear 106. The intermediate gear 112 meshes with the output gear 116. The output shaft 114 is supported rotatably by the first motor cover 22 and the gear cover 104 via unillustrated bearings. The output gear 116 is attached to the output shaft 114. The gear cover 104 covers an outer surface of the first motor cover 22, whereby an oil reservoir 126 which communicates with the return oil path 38 is formed. In other words, the oil reservoir 126 is formed inside the speed reducer 14. The oil reservoir 126 stores oil from the case 18 and oil from the gear cover 104.

The gear cover 104 is provided with two oil level gauges 128 for detecting an amount of oil inside the oil reservoir 126. Also, the gear cover 104 is provided with two oil pumps 130 for supplying oil from inside the oil reservoir 126 to the external oil cooler.

The inverter 16 is connected with a battery (not illustrated) via connecting terminals 132, converts a direct current from the battery into an alternating current, and supplies the current to the motor 12.

The motor unit 10 described thus far is formed with oil paths as follows:
Referring to Fig. 5, the first motor cover 22 has an oil path 134 communicating with the outward oil path 34 to supply oil from the oil filter 100 to the outward oil path 34, and oil paths 136, 138, 140 branching from the oil path 134. The oil path 136 communicates with an oil path 142 inside the speed reducer 14, to supply oil to the input gear bearing 120. Oil from the oil path 138 is supplied to the motor bearing 42 and the input gear bearing 118. Oil from the oil path 140 is supplied to the coil end of the stator coil 64. As described, oil is supplied into the case 18 via the oil paths 138, 140. Oil from the oil path 134 flows through the outward oil path 34 and is supplied to the second motor cover 24.

The second motor cover 24 has oil paths 144, 146, 148. Oil which flows through the outward oil path 34 and is supplied to the second motor cover 24 is divided by the branching piece 30, supplied to the coil end of the stator coil 64 via the oil path 144, and sent toward the cover 90 via the oil path 146. The cover 90 has an oil path 150. The oil path 150 is capable of communicating the oil paths 146 and 148 with each other. In other words, the oil path 146 and the oil path 150 communicate with each other via the through-hole 94 of the gasket 92, while the oil path 150 and the oil path 148 communicate with each other via the through-hole 96 of the gasket 92. Therefore, the oil paths 146 and 148 of the second motor cover 24 communicate with each other via the oil path 150 of the cover 90, and oil from the oil path 146 is supplied to the motor bearing 44 and its surroundings via the oil paths 150, 148. Also, the oil path 150 communicates, via the pipe 98, the hollow portion 50 of the rotor shaft 46 and the rotor core holes 52, with an oil path 152 which leads to the coil end of the stator coil 64. Therefore, oil from the oil path 150 is supplied to the coil end of the stator coil 64 via the oil path 152. As described, the oil from the outward oil path 34 is supplied into the case 18 via the second motor cover 24 and the cover 90.

Oil which is supplied to the coil end of the stator coil 64 is then supplied to the oil reservoir 126 via an oil path 154 and the return oil path 38, or via an oil path 156 of the first motor cover 22.

In the present embodiment, the oil path 134 represents the first oil path. The oil paths 138, 140 represent the second oil path. The oil paths 144, 146, 148 represent the third oil path.

According to the motor unit 10 described thus far, both of the outward oil path 34 and the return oil path 38 are provided, not between the stator housing 20 and the stator core 62, but outside the stator housing 20, providing communication between the first motor cover 22 and the second motor cover 24. Also, the stator core 62 is fixed to the stator housing 20. Therefore, by simplifying the structure between the stator housing 20 and the stator core 62, it is possible to reduce the size of the stator housing 20.

Since the stator core 62 is fixed to the stator housing 20 by means of shrink fit, the outer circumferential surface of the stator core 62 and the inner circumferential surface of the stator housing 20 make surface contact in the circumferential direction, making it possible to hold the stator core 62 more firmly by the stator housing 20.

Since it is possible to supply oil to the outward oil path 34 via the oil path 134 inside the first motor cover 22 and into the case 18 via the oil paths 138, 140, it is possible to supply oil to the rotor 40 and the stator core 64 smoothly while making effective use of the first motor cover 22 for oil supply.

It is possible to supply oil from the outward oil path 34 into the case 18 via the oil paths 144, 146, 148 inside the second motor cover 24 and to supply oil to the rotor 40 and the stator core 64 smoothly while making effective use of the second motor cover 24 for oil supply.

Since the stator housing 20 has no ribs from the output side end portion to the non-output side end portion in its outer circumferential surface, it is possible to reduce the weight, and further reduce the size, of the stator housing 20.

By using the first externally attached pipe 32 which has the outward oil path 34 and is held by the first motor cover 22 and the second motor cover 24, and the second externally attached pipe 36 which has the return oil path 38 and is held by the first motor cover 22 and the second motor cover 24, it is possible to provide the outward oil path 34 and the return oil path 38 easily outside the stator housing 20.

The arrangement that the outward oil path 34 has a smaller sectional area than that of the return oil path 38 makes it possible to discharge oil to outside smoothly without the oil stagnating inside the return oil path 38.

Since the speed reducer 14 has the oil reservoir 126 which communicates with the return oil path 38, it is possible to supply oil to the speed reducer 14 smoothly.

The present invention being thus far described in terms of preferred embodiments, it is obvious that these may be varied in many ways within the scope and the spirit of the present invention. The scope of the present invention is only limited by the accompanied claims.

### REFERENCE SIGNS LIST

10 Motor unit
12 Motor
14 Speed reducer
16 Inverter
18 Case
20 Stator housing
22 First motor cover
24 Second motor cover
32 First externally attached pipe
34 Outward oil path
36 Second externally attached pipe
38 Return oil path
40 Rotor
46 Rotor shaft
48 Rotor core
60 Stator
62 Stator core
64 Stator coil
90 Cover
92 Gasket
100 Oil filter
126 Oil reservoir
130 Oil pump
134, 136, 138, 140, 142, 144, 146, 148, 150, 152, 154, 156 Oil paths

## Claims

1. A motor comprising:
a case including a stator housing, a first motor cover provided at an output side end portion of the stator housing, and a second motor cover provided at a non-output side end portion of the stator housing;
an outward oil path provided outside the stator housing and providing communication between the first motor cover and the second motor cover;
a return oil path provided outside the stator housing at a lower position than the outward oil path and providing communication between the first motor cover and the second motor cover;
a rotor provided inside the case and held by the first motor cover and the second motor cover; and
a stator core provided inside the case and radially outside the rotor and fixed to the stator housing.

2. The motor according to Claim 1, wherein the stator core is fixed to the stator housing by means of shrink fit.

3. The motor according to Claim 1 or 2, wherein the first motor cover includes a first oil path communicating with the outward oil path for supplying oil to the outward oil path, and a second oil path branched from the first oil path for supplying oil into the case.

4. The motor according to one of Claims 1 through 3, wherein the second motor cover includes a third oil path communicating with the outward oil path for supplying oil from the outward oil path into the case.

5. The motor according to one of Claims 1 through 4, wherein the stator housing has no ribs from the output side end portion to the non-output side end portion in its outer circumferential surface.

6. The motor according to one of Claims 1 through 5, further comprising a first externally attached pipe having the outward oil path and held by the first motor cover and the second motor cover, and
a second externally attached pipe having the return oil path and held by the first motor cover and the second motor cover.

7. The motor according to Claim 6, wherein the outward oil path has a smaller sectional area than the return oil path.

8. A motor unit comprising:
the motor according to one of Claims 1 through 7; and
a speed reducer provided on a side of the first motor cover in order to slow down rotation of the rotor, and having an oil reservoir communicating with the return oil path.
